# EUROPÄISCHE PATENTSCHRIFT

(11) **EP 0 946 648 B1**
(45) Veröffentlichungstag und Bekanntmachung des Hinweises auf die Patenterteilung: **05.07.2000**
(21) Anmeldenummer: 97954381.6
(22) Anmeldetag: 11.12.1997
(51) Int. Cl.: C08L 83/08, C08G 77/26

(54) **HÄRTBARE ORGANOSILOXANMASSEN**
HARDENABLE ORGANOSILOXANE PRODUCTS
PRODUITS DURCISSABLES D'ORGANOSILOXANE

(30) Priorität: 17.12.1996 DE 19652544
(43) Veröffentlichungstag der Anmeldung: 06.10.1999
(73) Patentinhaber: Wacker-Chemie GmbH, 81737 München (DE)
(72) Erfinder: DAUTH, Jochen, D-84489 Burghausen (DE); DEUBZER, Bernward, D-84489 Burghausen (DE); HERZIG, Christian, D-83329 Waging am See (DE); CONTI, Andy, Adrian, MI 49221 (US); SCHNITZER, Klaus, D-84387 Julbach (DE)
(74) Vertreter: Budczinski, Angelika
(86) Internationale Anmeldenummer: EP9706921
(87) Internationale Veröffentlichungsnummer: WO9827163

(56) Entgegenhaltungen:
- EP-A- 0 283 204
- EP-A- 0 439 777
- EP-A- 0 618 237
- US-A- 5 278 273
- Derwent Accession, Woche 9305, London: Derwent Publications Ltd., AN 93-40724 (05), Klasse C08L, XP002900023 & JP,A,4 366173 (SUMITOMO BAKELITE CO).

## Beschreibung

Die Erfindung betrifft Maleinimidgruppen enthaltende Organosiliciumverbindungen, ein Verfahren zu deren Herstellung sowie Maleinimidgruppen enthaltende Organosiloxanmassen, insbesondere zur Herstellung abhäsiver Beschichtungen.

Maleingruppen enthaltende Organosiliciumverbindungen und deren Verwendung in vernetzbaren Zusammensetzungen sind seit langem bekannt. In US 3,558,741 (General Electric Co., ausgegeben am 26. Januar 1997) sind thermisch polymerisierbare Zusammensetzungen mit Imido-substituierten Organopolysiloxanen und weiteren ungesättigten Monomeren und Polymeren offenbart, die zur Herstellung sogenannter Polymer-Blends geeignet sind. Maleingruppen enthaltende Organosiliciumverbindungen, Verfahren zu deren Herstellung und Verwendung sind in DE-B 25 57 940 (Shin-Etsu Chemical Co., offengelegt am 1. July 1976) bzw. der entsprechenden US 4,075,167 beschrieben. Lichtvernetzbare, Maleingruppen enthaltende Organosiliciumverbindungen werden in DE-A 32 35 663 (Ciba-Geigy AG, offengelegt am 21.04.83) bzw. der entsprechenden GB-A 2109390 beschrieben. Aus US 4,829,138 (Rhone-Poulenc Chimie, ausgegeben am 9. Mai 1989) sind diorganopolysiloxylierte N,N'-bis-maleinimide bekannt, die mit weiteren Maleinimid-Comonomeren und Radikalinitiatoren zu temperaturstabilen Polymeren ausgehärtet werden können. Die radikalische Vernetzung von Bismaleinimidorganopolysiloxanen mit z.B. Silicon-(meth)acrylaten ist in EP-B 283 204 (Loctite Corp., offengelegt am 21.09.88) beschrieben. Das generelle Verfahren der initiatorfreien Photopolymerisation von elektronenreichen und -armen Verbindungen über Charge-Transfer-Komplexe ist aus der EP-A 618 237 (Fusion Systems Corp., offengelegt am 5.10.94) bekannt.

Gegenstand der Erfindung sind vernetzbare Organosiloxanmassen enthaltend
A) Organosiliciumverbindungen mit mindestens einer Maleinimidgruppe der Formel 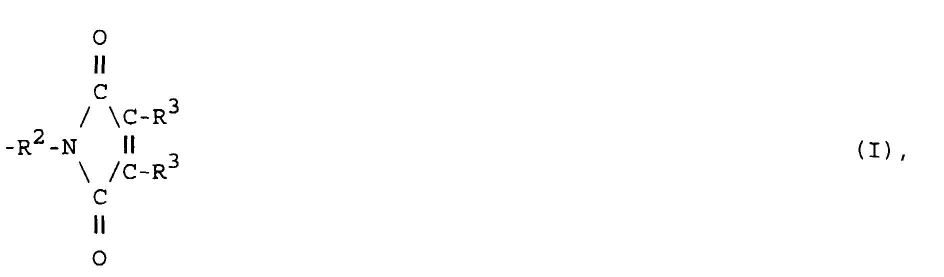 wobei
   R² einen zweiwertigen, gegebenenfalls substituierten Kohlenwasserstoffrest darstellt, der ein oder mehrere Ethersauerstoffatome enthalten kann, und
   R³ gleich oder verschieden ist und ein Wasserstoffatom oder einen gegebenenfalls substituierten Kohlenwasserstoffrest mit 1 bis 18 Kohlenstoffatomen bedeutet,
B) Alkenyloxyverbindung ausgewählt aus Alkenyloxyverbindungen der Formel

   R⁴- CH = CH - OR⁵ (II),

   Alkenyloxyverbindungen der Formel

   R⁴- CH = CH - O - R⁶ - O - CH = CH - R⁴ (III),

   oligomeren oder polymeren Organosiliciumverbindungen mit mindestens einer Alkenyloxygruppe der Formel

   R⁴- CH = CH - O - (IV)

   sowie deren Gemische,
   wobei
   R⁴ gleich oder verschieden sein kann und ein Wasserstoffatom oder einen Methylrest bedeutet, R⁵ einen gegebenenfalls substituierten Kohlenwasserstoffrest mit 1 bis 18 Kohlenstoffatomen, der mit einem oder mehreren Sauerstoffatomen unterbrochen sein kann, bedeutet und R⁶ eine für R² angegebene Bedeutung hat,
C) gegebenenfalls Radikale bildende Initiatoren und
D) gegebenenfalls Inhibitoren.

Bei den erfindungsgemäß eingesetzten Organosiliciumverbindungen (A) kann es sich um beliebige, bisher bekannte Maleinimidgruppen aufweisende Organosiliciumverbindungen, die z.B. monomer, oligomer oder polymer, linear, verzweigt oder cyclisch sein können, handeln.

Vorzugsweise handelt es sich bei den Organosiliciumverbindungen (A) um solche aus Einheiten der Formel

AₐR_{b}SiX_{c}O_{(4-a-b-c)/2} (V),

wobei
R gleich oder verschieden ist, einen einwertigen, gegebenenfalls halogenierten Kohlenwasserstoffrest mit 1 bis 18 Kohlenstoffatomen bedeutet, X gleich oder verschieden ist und ein Halogenatom oder ein Rest -OR¹ ist, wobei R¹ einen Alkylrest mit 1 bis 18 Kohlenstoffatomen je Rest, der durch ein oder mehrere Ethersauerstoffatome substituiert sein kann, bedeutet, A einen Rest der Formel (I) darstellt,
a 0 oder 1 ist,
b 0, 1, 2 oder 3 ist und
c 0, 1, 2 oder 3 ist,
mit der Maßgabe, daß die Summe a+b+c≤4 ist und mindestens ein Rest A je Molekül enthalten ist.

Vorzugsweise ist bei den erfindungsgemäß eingesetzten Organosiliciumverbindungen (A) die Gruppierung der Formel (I) über eine SiC-Verknüpfung an das Siliciumatom geknüpft.

Bei den erfindungsgemäß eingesetzten Organosiliciumverbindungen (A) aus Einheiten der Formel (V) hat a bevorzugt einen durchschnittlichen Wert von 0,001 bis 1,0, b bevorzugt einen durchschnittlichen Wert von 0 bis 3,0 und c bevorzugt einen durchschnittlichen Wert von 0,0 bis 3,0 und die Summe a+b+c bevorzugt einen durchschnittlichen Wert von 0,1 bis 4,0.

Die erfindungsgemäß eingesetzten Organosiliciumverbindungen (A) besitzen ein durchschnittliches Molekulargewicht (Mₙ) von vorzugsweise 200 bis 1 000 000 g/mol, besonders bevorzugt 1 000 bis 50 000 g/mol.

Die erfindungsgemäß eingesetzten Organosiliciumverbindungen (A) besitzen eine Viskosität von vorzugsweise 10 bis 1 000 000 mm²/s bei 25°C, bevorzugt 20 bis 100 000 mm²/s bei 25°C.

Beispiele für Reste R sind Alkylreste, wie der Methyl-, Ethyl-, n-Propyl-, iso-Propyl-, 1-n-Butyl-, 2-n-Butyl-, iso-Butyl-, tert.-Butyl-, n-Pentyl-, iso-Pentyl-, neo-Pentyl, tert. Pentylrest; Hexylreste, wie der n-Hexylrest; Heptylreste, wie der n-Heptylrest; Octylreste, wie der n-Octylrest und iso-Octylreste, wie der 2,2,4-Trimethylpentylrest; Nonylreste, wie der n-Nonylrest; Decylreste, wie der n-Decylrest; Dodecylreste, wie der n-Dodecylrest; Octadecylreste, wie der n-Octadecylrest; Cycloalkylreste, wie der Cyclopentyl-, Cyclohexyl-, Cycloheptylreste und Methylcyclohexylreste; Alkenylreste, wie der Allyl-, Methallyl- und Hexenylrest; Alkinylreste, wie der Propargylrest; Arylreste, wie der Phenyl-, Naphthyl- und Anthryl- und Phenanthrylrest; Alkarylreste, wie o-, m-, p-Tolylreste; Xylylreste und Ethylphenylreste; und Aralkylreste wie der Benzylrest, der α- und β-Phenylethylrest.

Beispiele für halogenierte Reste R sind Halogenalkylreste, wie der 3,3,3-Trifluor-n-propylrest, der 2,2,2,2',2',2'-Hexafluorisopropylrest, der Heptafluorisopropylrest und Halogenarylreste, wie der o-, m- und p-Chlorphenylrest.

Bevorzugt handelt es sich bei Rest R um den Methyl- und Phenylrest, wobei der Methylrest besonders bevorzugt ist.

Beispiele für Alkylreste R¹ sind die für Rest R dafür angegebenen Beispiele sowie der Methoxyethyl- und Ethoxyethylrest.

Bevorzugt handelt es sich bei Rest R¹ um den Methyl-, Ethyl-, iso-Propyl- und Methoxyethylrest, wobei Methyl- und Ethylrest bevorzugt sind.

Bei Rest X gleich Halogenatom handelt es sich bevorzugt um das Chloratom.

Bevorzugt handelt es sich bei Rest X um einen Methoxy- und Ethoxyrest.

Beispiele für Reste R² sind Alkylenreste, wie -CH₂-CH₂-, - (CH₂)₃-, -(CH₂)₄- und -CH₂-CH(CH₃)-CH₂-, Alkenylenreste, wie -CH=CH-CH₂-, aromatische Reste, wie -CH₂-CH₂-C₆H₄- und -(CH₂)₃-C₆H₄-, sowie solche der Formeln

-(CH₂)₃O- (CH₂CH₂O)ₓCH₂CH₂- (VI) ,

-CH=CH-CH₂O(CH₂CH₂O)ₓCH₂CH₂- (VI'),

- (CH₂)₃O-(CH(CH₃)CH₂O)ₓCH₂CH₂- (VIʺ)

und

-CH=CH-CH₂O-(CH(CH₃)CH₂O)ₓCH₂CH₂-, (VI'''),

wobei x jeweils 0 oder eine ganze Zahl von 1 bis 15 ist, wie -CH₂CH₂-O-CH₂CH₂CH₂-.

Bevorzugt handelt es sich bei Rest R² um zweiwertige gegebenenfalls mit Halogenatomen substituierte Kohlenwasserstoffreste mit 1 bis 35 Kohlenstoffatomen, die durch ein oder mehrere Ethersauerstoffatome unterbrochen sein können.

Besonders bevorzugt handelt es sich bei Rest R² um Alkylenreste und Alkenylenreste mit jeweils 1 bis 35 Kohlenstoffatomen, die durch ein oder mehrere Sauerstoffatome unterbrochen sein können, insbesondere um die Reste -(CH₂)₃-, -CH=CH-CH₂-, -CH₂-CH₂-C₆H₄- und -CH=CH-CH₂O(CH₂CH₂O)ₓCH₂CH₂- mit x gleich der obengenannten Bedeutung.

Beispiele für Reste R³ sind Wasserstoffatom und die für R angegebenen Beispiele.

Bevorzugt ist der Rest R³ ein Wasserstoffatom, der Methyl- oder der Phenylrest, wobei Wasserstoffatom besonders bevorzugt ist.

Beispiele für Reste A sind 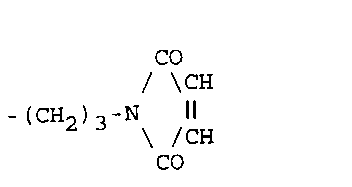 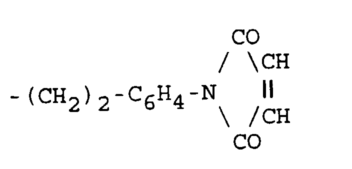 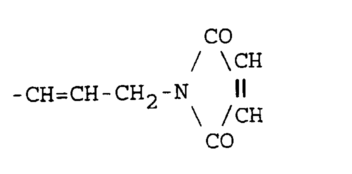 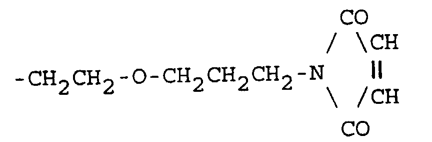 und 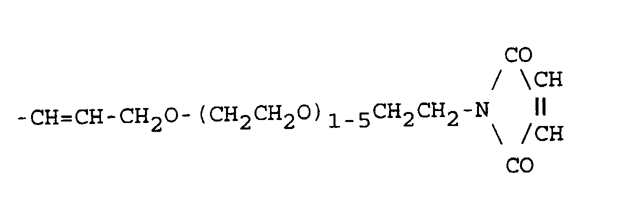 wobei 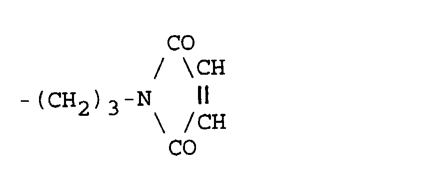 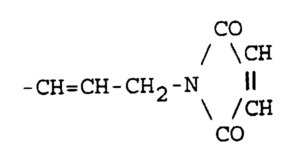 und 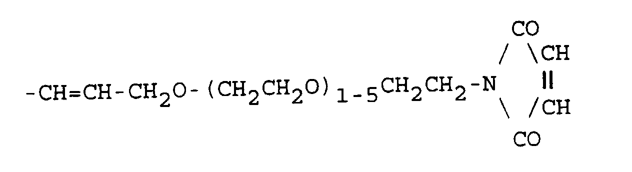 bevorzugt und 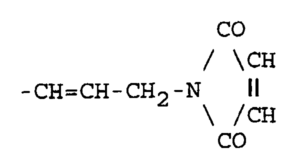 sowie 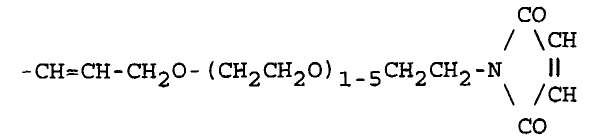 besonders bevorzugt sind.

Besonders bevorzugt handelt es sich bei den Maleinimidgruppen aufweisenden Organosiliciumverbindungen (A) um solche der Formel

A_{g}R_{3-g}SiO(SiR₂O)ₙ(SiRAO)ₘSiR_{3-g}A_{g} (VII),

wobei A und R die oben dafür angegebene Bedeutung haben, g gleich oder verschieden sein kann und 0 oder 1 ist, n 0 oder eine ganze Zahl von 1 bis 1500 ist und m 0 oder eine ganze Zahl von 1 bis 200 ist, mit der Maßgabe, daß mindestens ein Rest A je Molekül enthalten ist und n Einheiten (SiR₂O) und m Einheiten (SiRAO) beliebig im Molekül verteilt sein können.

Beispiele für die erfindungsgemäß eingesetzten Maleinimidgruppen aufweisenden Organosiliciumverbindungen (A) sind
Me₃SiO[(SiMe₂O)₂₅₋₄₀SiA¹MeO]₁₋₁₀SiMe₃ und
A¹-SiMe₂O(SiMe₂O)₅₀₋₆₀SiMe₂-A¹ mit A¹ gleich 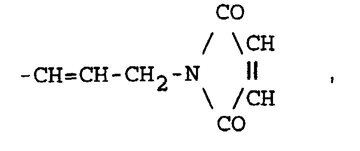
Me₃SiO[(SiMe₂O)₂₅₋₄₀SiA²MeO]₁₋₁₀SiMe₃ und
A²-SiMe₂O(SiMe₂O)₅₀₋₆₀SiMe₂-A² mit A² gleich 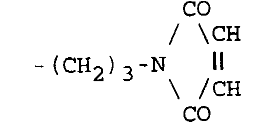
Me₃SiO[(SiMe₂O)₂₅₋₄₀SiA³MeO]₁₋₁₀SiMe₃ mit A³ gleich 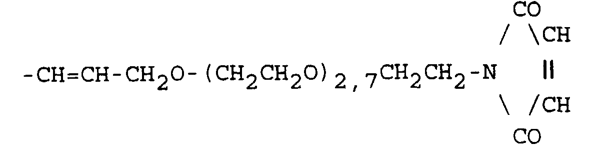 wobei
Me gleich Methylrest bedeutet.

Die erfindungsgemäßen Organosiliciumverbindungen (A) sind vorzugsweise vollständig mischbar mit der Komponente (B).

Sofern es sich bei den erfindungsgemäß eingesetzten Maleinimidgruppen aufweisenden Organosiliciumverbindungen (A) um bereits bekannte Verbindungen handelt, können diese nach in der Chemie gängigen Methoden hergestellt werden.

Ein weiterer Gegenstand der Erfindung sind Organosiliciumverbindungen mit mindestens einer Maleinimidgruppe der Formel 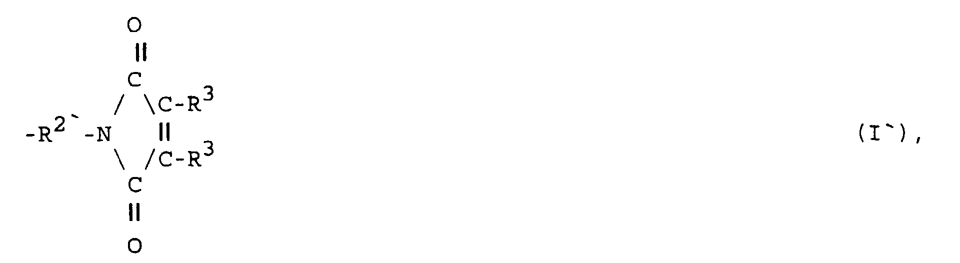 wobei
R^{2'} einen zweiwertigen, gegebenenfalls substituierten Alkenylenrest darstellt, der ein oder mehrere Ethersauerstoffatome enthalten kann, oder einen Rest der Formeln (VI) oder (VI") bedeutet und
R³ die oben angegebene Bedeutung hat.

Vorzugsweise handelt es sich bei den erfindungsgemäßen Organosiliciumverbindungen um solche aus Einheiten der Formel (V) mit A gleich einem Rest der Formel (I').

Vorzugsweise werden die erfindungsgemäßen Organosiliciumverbindungen durch Umsetzung von Si-gebundenem Wasserstoff aufweisenden Organosiliciumverbindungen mit endständig aliphatisch ungesättigten Maleinimiden der Formel 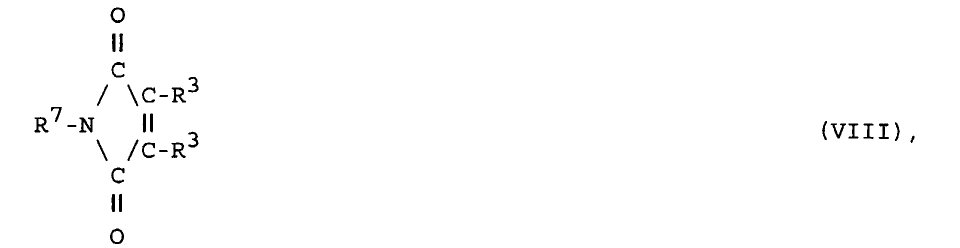 wobei R³ die oben genannte Bedeutung hat und R⁷ einen Rest der Formel

HC≡C-CH₂-, CH≡C-CH₂O(CH₂CH₂O)ₓCH₂CH₂-,

HC≡C-C(CH₃)₂-O-(CH₂-CH₂-O-)ₓ-CH₂-CH₂-,

HC≡C-C(CH₃)(C₂H₅)-O-(CH₂-CH₂-O-)ₓ-CH₂-CH₂-,

HC≡C-C(c-C₆H₁₀)-O-(CH₂-CH₂-O-)ₓ-CH₂-CH₂-,

HC≡C-C(CH₃)(CH₂-CH(CH₃)₂)-O-(CH₂-CH₂-O-)ₓ-CH₂-CH₂-,

HC≡C-C(CH₃)(C₆H₅)-O-(CH₂-CH₂-O-)ₓ-CH₂-CH₂-,

HC≡C-C(C₆H₅)₂-O-(CH₂-CH₂-O-)ₓ-CH₂-CH₂-

und

HC≡C-C(CH₃)(CH₂-CH₂-CH=C(CH₃)₂)-O-(CH₂-CH₂-O-)ₓ-CH₂-CH₂-,

wobei x 0 oder eine ganze Zahl von 1 bis 15 bedeutet, unter Übergangsmetallkatalyse in Substanz oder Lösung hergestellt.

Die Bedingungen, unter der die Umsetzung der erfindungsgemäßen Organosiliciumverbindungen durchgeführt wird, bzw. Art und Menge der eingesetzten Übergangskatalysatoren sind in der Siliciumchemie bekannt und können die gleichen sein wie auch bisher bei Hydrosilylierungsreaktionen. Beispielsweise sei herzu auf EP-B 508 491, Seite 6, Zeilen 20 bis 47 verwiesen.

Die erfindungsgemäß eingesetzten, endständig aliphatisch ungesättigten Maleinimide der Formel (VIII) können nach in der organischen Chemie gängigen Methoden hergestellt werden, wie z.B. in DE-A 27 51 901, DE-A 40 40 995, EP-B 257 831, GB-B 20 18 253 beschrieben.

Bevorzugt handelt es sich bei Rest R⁴ um ein Wasserstoffatom.

Beispiele für Reste R⁵ sind Wasserstoffatom und die für Rest R angegebenen Beispiele.

Bevorzugt handelt es sich bei Rest R⁵ um den Ethyl-, Propyl-, n-Butyl-, Isobutyl-, Dodecyl-, Octadecyl-, Hydroxyethyl-, Hydroxybutyl-, Butyloxyethyl-, Hydroxyhexyl-, Aminopropyl-, 2-Diethylaminoethyl-, Cyclohexyl-, t-Amyl-, 2-Ethylhexyl- und Reste der Formeln CH₃-(OCH₂CH₂)₃-, HO-CH₂-C₆H₁₂-CH₂- und HO-CH₂-CH₂-O-CH₂-CH₂-, wobei der Dodecyl-, Octadecyl-, 2-Ethylhexyl- und der Butyloxyethylrest besonders bevorzugt sind.

Beispiele für Rest R⁶ sind die für R² angegebenen Beispiele. Bevorzugt handelt es sich bei Rest R⁶ um -(CH₂)₂-, -(CH₂)₄-, -(CH₂)₆⁻, -(CH₂CH₂O)₁₋₁₅-CH₂CH₂-, -CH₂-C₆H₁₀-CH₂- und -((CH₂)₄O)₁₋₁₅(CH₂)₄-, wobei -(CH₂)₆-, -(CH₂CH₂O)₁₋₁₅-CH₂CH₂-, -CH₂-C₆H₁₀-CH₂- und -((CH₂)₄O)₁₋₁₅(CH₂)₄- besonders bevorzugt sind.

Beispiele für Alkenyloxyverbindungen der Formel (II) sind t-Butylvinylether, n-Butylvinylether, Cyclohexylvinylether, Dodecylvinylether, Amylvinylether, 2-Ethylhexylvinylether, Ethylenglykolbutylvinylether, Triethylenglykolmethylvinylether, Hexandiolmonovinylether, Cyclohexandimethanolmonovinylether und Octadecylvinylether, wobei Cyclohexylvinylether, Dodecylvinylether, Octadecylvinylether, 2-Ethylhexylvinylether und Ethylenglykolbutylvinylether bevorzugt und Dodecylvinylether, Octadecylvinylether sowie 2-Ethylhexylvinylether besonders bevorzugt sind.

Beispiele für Alkenyloxyverbindungen der Formel (III) sind Diethylenglykoldivinylether, Triethylenglykoldivinylether, Cyclohexandimethanoldivinylether, [oligo- oder poly-THF-Divinylether], [oligo- oder polyethylenglykol-Divinylether], Butandioldivinylether, Hexandioldivinylether und Tetraethylenglykoldivinylether, wobei Triethylenglykoldivinylether, Hexandioldivinylether und [oligo- oder poly-THF-Divinylether] bevorzugt und Triethylenglykoldivinylether sowie Hexandioldivinylether besonders bevorzugt sind.

Bei den oligomeren oder polymeren Organosiliciumverbindungen mit mindestens einer Alkenyloxygruppe der Formel (IV), die erfindungsgemäß als Komponente (B) eingesetzt werden können, kann es sich um beliebige, bisher bekannte Organosililiciumverbindungen, wie z.B. lineare, verzweigte und cyclische, handeln.

Bevorzugt handelt es sich bei den Organosiliciumverbindungen, die erfindungsgemäß als Komponente (B) eingesetzt werden können, um vinyloxyfunktionelle Organopolysiloxane, Siloxancopolymere mit Vinyloxygruppen oder 1-Propenoxygruppen, wobei Siloxancopolymere mit Vinyloxygruppen nicht zuletzt aus Gründen der technischen Herstellbarkeit besonders bevorzugt sind.

Beispiele für Organosiliciumverbindungen mit mindestens einer Alkenyloxygruppe der Formel (IV), die erfindungsgemäß als Komponente (B) eingesetzt werden können, sind solche wie in EP-B 105 341, Seite 2, Zeilen 38 bis 51, EP-B 439 777, Seite 2, Zeile 29 bis Seite 5 Zeile 24, US 5,145,915, Spalte 2, Zeile 26 bis Spalte 3, Zeile 17, WO 93/22368 und WO 93/22369 beschrieben.

Bevorzugt handelt es sich bei der Komponente (B) um Organosiliciumverbindungen mit mindestens einer Alkenyloxygruppe der Formel (IV).

Die erfindungsgemäß eingesetzten Verbindungen (B) sind handelsübliche Produkte bzw. können nach in der Chemie gängigen Methoden hergestellt werden.

Die erfindungsgemäßen Massen können die Organosiliciumverbindungen (A) sowie die Verbindungen (B) in einem im weiten Bereich schwankenden Verhältnis enthalten, wobei sich dieses im wesentlichen an der Stöchiometrie dieser Verbindungen orientiert. So liegt das zahlenmäßige Verhältnis der Maleinimidgruppen gemäß Formel (I) in der Organosiliciumverbindung (A) zu den R⁴-CH=CH-O-Resten in Verbindung (B) im Bereich von vorzugsweise 0,2 bis 5,0, besonders bevorzugt von 0,7 bis 1,8, insbesondere von 0,9 bis 1,1.

Die erfindungsgemäßen Zusammensetzungen können nun unter dem Einfluß energiereicher Strahlung vernetzt werden. Viele Strahlungsarten sind hierbei geeignet, wie etwa Elektronenstrahlen, γ-Strahlen, Röntgenstrahlen, UV-Licht, wie z.B. solches mit Wellenlängen im Bereich von von 200 bis 400 nm, und sichtbares Licht, wie z.B. solches mit einer Wellenlänge von 400 bis 600 nm, also sogenanntes "Halogenlicht". Ultraviolettlicht kann z.B. in Xenon-, Quecksilbernieder-, Quecksilbermittel- oder Quecksilberhochdrucklampen und Excimerlampen erzeugt werden.

Ein weiterer Gegenstand der vorliegenden Erfindung ist ein Verfahren zur Vernetzung der erfindungsgemäßen Maleinimidsiloxanmassen durch Bestrahlung mit energiereicher Strahlung.

Ein weiterer Gegenstand der vorliegenden Erfindung betrifft Formkörper hergestellt durch Vernetzung der erfindungsgemäßen Zusammensetzungen.

Vorzugsweise handelt es sich bei der energiereichen Strahlung, durch welche die erfindungsgemäßen Massen vernetzt werden, um UV-Licht im Bereich von 200-400 nm, um monochromatisches Licht von Excimerlampen und um Elektronenstrahlen.

Die erfindungsgemäßen Zusammensetzungen können auch ohne Zufuhr von energiereicher Strahlung rein thermisch vernetzen, weshalb sie im allgemeinen auch nur begrenzte Haltbarkeit unter Ausschluß von energiereicher Strahlung haben. Diese sogenannte Topfzeit beträgt aber ein Vielfaches der Vernetzungszeit unter Einfluß von energiereicher Strahlung, weshalb eine rein thermische Härtung zwar möglich, aber nicht bevorzugt ist.

Die erfindungsgemäßen Zusammensetzungen können nun zusätzlich zu Maleinimidgruppen aufweisender Organosiliciumverbindung (A) und Alkenyloxygruppen aufweisender Verbindung (B) Radikale bildende Initiatoren (C) enthalten, was jedoch nicht bevorzugt ist. Beispielsweise kann mit einem Zusatz von Radikalinitiatoren, die eingestrahlte Energie absorbieren und daraufhin in Radikale zerfallen, eine Erhöhung der Vernetzungsgeschwindigkeit erzielt werden.

Bei den gegebenenfalls eingesetzten Initiatoren (C) kann es sich um alle bisher bekannten Initiatoren handeln.

Beispiele für gegebenenfalls eingesetzte Initiatoren (C) sind Benzoinether, wie Benzoin-n-butylether, Benzilketale, wie Benzildimethylketal, α,α-Dialkoxyacetophenone, wie α,α-Diethoxyacetophenon, α-Hydroxyalkylphenone, wie 1-Hydroxycyclohexylphenylketon und 2-Hydroxy-2-methyl-1-phenylpropan-1-on, α-Aminoalkylphenone, wie 2-Methyl-1-[4-(methylthio)phenyl]-2-morpholinopropan-1-on, Acylphosphinoxide, wie 2,4,6-Trimethylbenzoyl-diphenylphosphinoxid, und Bisacylphosphinoxide, wie Bis(2,6-dimethoxybenzoyl)-isooctylphosphinoxid.

Als gegebenenfalls eingesetzter Initiator (C) sind Ketone, wie Benzophenon, 1-chlor-4-propoxythioxanthon, Isopropylthioxanthon und Thioxanthon, ebenfalls wirksam, besser jedoch in Kombination mit Aminoinitiatoren, wie Triethanolamin oder 2-n-Butoxyethyl-4-(dimethylamino)benzoat.

Falls Initiatoren (C) eingesetzt werden, handelt es sich um Mengen von vorzugsweise 0,5 bis 5 Gew.-%, besonders bevorzugt 1 bis 3 Gew.-%, jeweils bezogen auf das Gesamtgewicht von Komponenten (A) und (B).

Falls Initiatoren (C) zur Herstellung der erfindungsgemäßen Massen eingesetzt werden, ist es schon aus Gründen der besseren Handhabung bevorzugt, das Gemisch aus den Komponenten (A)+(B)+(C) mit geringen Mengen einer inhibierenden Komponente (D) zu versetzen, um beispielsweise vorzeitige Vernetzung einer verwendungsfähigen Formulierung während deren Lagerung zu verhindern. Aufgabe dieser Stoffe ist es im allgemeinen, entstehende Radikale unwirksam zu machen und damit den Beginn einer radikalischen Polymerisation zu verzögern oder zu verhindern. Werden dann durch Bestrahlung oder erhebliche Erwärmung große Mengen an Radikalen freigesetzt, führt dies zu einem raschen Verbrauch der Inhibitormoleküle (D), und eine Aushärtung der erfindungsgemäßen Masse setzt sehr plötzlich ein.

Bei den gegebenenfalls eingesetzten Inhibitoren (D) kann es sich um alle Inhibitoren handeln, die auch bisher in radikalisch vernetzbaren Massen eingesetzt wurden.

Beispiele für gegebenenfalls eingesetzte Inhibitoren (D) sind Hydrochinon, 4-Methoxyphenol, 2,6-Ditert.butyl-4-methylphenol oder Phenothiazin.

Falls Inhibitoren (D) zur Herstellung der erfindungsgemäßen Massen verwendet werden, handelt es sich um Mengen von vorzugsweise 10 bis 10 000 ppm (parts per million), besonders bevorzugt 50 bis 400 ppm, jeweils bezogen auf das Gesamtgewicht der erfindungsgemäßen Zusammensetzung.

Die erfindungsgemäße Strahlungsvernetzung erfolgt bei einer Temperatur von vorzugsweise 0 bis 100°C, besonders bevorzugt 20 bis 60°C, und dem Druck der umgebenden Atmosphäre, d.h. 900 bis 1100 hPa.

Des weiteren ist es möglich, jedoch nicht bevorzugt, die erfindungsgemäßen Maleinimidsiloxanmassen ausschließlich thermisch zu härten, wobei dann der Zusatz von Radikale bildenden Peroxiden oder Azoverbindungen (E) bevorzugt ist.

Beispiele für gegebenenfalls für die thermische Vernetzung eingesetzte Komponente (E) sind Lauroylperoxid, Benzoylperoxid, 2,4-Dichlorbenzoylperoxid und Azoisobutyronitril.

Falls zur Herstellung der erfindungsgemäßen Massen Radikale bildende Peroxide oder Azoverbindungen (E) eingesetzt werden, handelt es sich um Mengen von vorzugsweise 0,5 bis 5 Gewichtsprozent, besonders bevorzugt 1 bis 3 Gewichtsprozent, jeweils bezogen auf das Gesamtgewicht der eingesetzten Komponenten (A) und (B).

Falls die erfindungsgemäßen Massen thermisch vernetzt werden, so erfolgt dies bei einer Temperatur von vorzugsweise 50 bis 200°C, besonders bevorzugt von 70 bis 150°C, und dem Druck der umgebenden Atmosphäre, d.h. 900 bis 1100 hPa. Die umgebende Atmosphäre kann dabei außer Luft auch Stickstoff, Xenon oder ein anderes Schutzgas sein.

Des weiteren können die erfindungsgemäßen Massen unabhängig von der Art der Vernetzung Zusatzstoffe (F), wie z.B. Füllstoffe, Pigmente und Haftvermittler, wie Silane oder Epoxidverbindungen, enthalten. Vorzugsweise enthalten die erfindungsgemäßen Massen über die Komponenten(A) bis (F) hinausgehend keine weiteren Stoffe. Art und Menge der Zusatzstoffe (F) richten sich in erster Linie nach den Anforderungen der jeweiligen Verwendung und sind in der Fachwelt bekannt.

Die erfindungsgemäßen Zusammensetzungen haben eine Viskosität von vorzugsweise 200 bis 10 000 mm²/s, besonders bevorzugt von 300 bis 5 000 mm²/s, jeweils bei 25°C.

Die Herstellung der erfindungsgemäßen Massen kann auf beliebige und bekannte Art und Weise erfolgen, wie z.B. durch einfaches Vermischen der einzelnen Komponenten.

Bei den einzelnen Komponenten der erfindungsgemäßen Zusammensetzungen kann es sich jeweils um eine einzige Art einer derartigen Komponente wie auch um ein Gemisch aus verschiedenen Arten dieser Komponenten handeln.

Die erfindungsgemäßen Zusammensetzungen aus Komponente (A) und (B) haben den Vorteil, daß sie ohne weitere Zusätze, wie Comonomere und Initiatoren, photopolymerisiert werden können, wobei es sich um eine radikalische Polymerisation handelt, die durch einen Charge-Transfer-Komplex initiiert wird.

Die erfindungsgemäßen Maleinimidsiloxanmassen haben den Vorteil, daß Komponente (A) mit der Komponente (B) ausgezeichnet verträglich ist und daher klare, bei Lichtausschluß und Raumtemperatur lagerstabile Mischungen ohne Phasenseparation erhalten werden.

Des weiteren haben die erfindungsgemäßen Massen den Vorteil, daß sie auf einfache Weise und sehr leicht zu festen Überzügen oder Formkörpern vernetzen.

Ferner haben die erfindungsgemäßen Massen den Vorteil, daß sie bei der Polymerisation keine flüchtigen, toxischen, niedermolekularen Spaltprodukte eliminieren.

Die erfindungsgemäßen Massen können überall dort eingesetzt werden, wo auch bisher vernetzbare Zusammensetzungen auf der Basis von Maleinimidsiloxanmassen eingesetzt wurden. Beispielsweise eignen sich die erfindungsgemäßen Massen hervorragend zur Herstellung von Formkörpern, wie z.B. Überzügen. Beispiele für Oberflächen, auf welche die erfindungsgemäßen Überzüge aufgebracht werden können, sind diejenigen von Papier, Holz, Kork, Kunststoffolien, z.B. Polyethylenfolien oder Polypropylenfolien, keramischen Gegenständen, Glas, einschließlich Glasfasern, Metallen, Pappen, einschließlich solcher aus Asbest, und von gewebtem und ungewebtem Tuch aus natürlichen oder synthetischen organischen Fasern.

Das Auftragen der erfindungsgemäßen Maleinimidsiloxanmassen auf die zu überziehenden Oberflächen kann in beliebiger, für die Herstellung von Überzügen aus flüssigen Stoffen geeigneter und vielfach bekannter Weise erfolgen, beispielseise durch Tauchen, Streichen, Gießen, Sprühen, Aufwalzen, Drucken, z.B. mittels einer Offsetgravurüberzugsvorrichtung, Messer- oder Rakelbeschichtung. Insbesondere eignen sich die erfindungsgemäßen Massen zur Verwendung als abhäsiven Beschichtungsmassen.

In den nachstehend beschriebenen Beispielen beziehen sich alle Angaben von Teilen und Prozentsätzen, falls nicht anders angegeben, auf das Gewicht. Sofern nicht anders angegeben, werden die nachstehenden Beispiele bei einem Druck der umgebenden Atmosphäre, also etwa bei 1000 hPa, und bei Raumtemperatur, also bei etwa 20°C, bzw. bei einer Temperatur, die sich beim Zusammengeben der Reaktanden bei Raumtemperatur ohne zusätzliche Heizung oder Kühlung einstellt, durchgeführt. Im folgenden beziehen sich alle Viskositätsangaben auf eine Temperatur von 25°C.

### Beispiel 1

### I) Synthese von N-Allylmaleinimid:

25,7 g (0,45 mol) N-Allylamin werden in 209,3 g Aceton unter Rühren vorgelegt. Dazu tropft man innerhalb von 30 Minuten eine Lösung von 44,2 g (0,45 mol) Maleinsäureanhydrid in 140 g Aceton und rührt anschließend weitere drei Stunden. Nach der Filtration erhält man 57,4 g (82,2 % d. Th.) eines hellgelben Feststoffes, der nach der Trocknung in 114,8 g Paraffinöl dispergiert wird. Anschließend wird die Dispersion mit 36,3 g (0,37 mol) konzentrierter Schwefelsäure versetzt und zwei Stunden gerührt. Im Hochvakuum (0,1 mbar) wird dann über drei Stunden langsam auf 146°C temperiert, wobei das Produkt bei einer Siedetemperatur von 68°C destilliert. Man erhält 30,3 g (60 % d. Th.) N-Allylmaleinimid.

### II) Herstellung von Maleinimidsiloxan VS I:

2,35 g (17,1 mmol) des oben unter I) erhaltenen N-Allylmaleinimid, 15 mg (460 ppm bezogen auf Reaktanteneinsatz) Hydrochinonmonomethylether, 12 g Butylacetat, 115 mg (20 ppm elementares Platin bezogen auf Reaktanteneinsatz) einer Lösung von Hexachloroplatinsäure in Ethylenglykol mit einem Platingehalt von 0,6 % und 30 g (17,1 mmol SiH) eines Polysiloxanes mit Trimethylsiloxy-, Dimethylsiloxy- und Hydrogenmethylsiloxyeinheiten der Viskosität 395 mm²/s werden 4 Stunden bei 130 °C gerührt. Nach der Filtration wird das Reaktionsprodukt im Hochvakuum bei 110 °C bis zur Gewichtskonstanz eingeengt. Man erhält 29,4 g (90,9 % d. Th.) eines orange gefärbten Siliconöles der Viskosität 2835 mm²/s.

5,0 g (2,64 mmol C=C-Doppelbindung) VS I, dessen Herstellung oben beschrieben ist, werden mit 0,56 g (2,64 mmol C=C-Doppelbindung) Dodecylvinylether gemischt. Die klare, gelb gefärbte Formulierung wird dann mit einem Glasstab in einer Schichtstärke von ca. 2-3 µm auf ein PE-beschichtetes Papier(käuflich erhältlich bei der Fa. PWA Raubling) aufgetragen. Die Härtung erfolgt bei einer Bahngeschwindigkeit von 5 m/min unter einer Mitteldruckquecksilberlampe der Fa. Fusion (120 W/cm) in einer Inertisierungskammer unter Stickstoff bei einer Sauerstoffkonzentration von 45 ppm. Man erhält eine vollständig vernetzte Siliconbeschichtung.

### Beispiel 2

### III) Herstellung von Maleinimidsiloxan VS II:

Die in Beispiel 1 unter II) beschriebene Herstellungsweise wird wiederholt mit der Abänderung, daß anstelle von 30 g eines Polysiloxanes mit Trimethylsiloxy-, Dimethylsiloxy- und Hydrogenmethylsiloxyeinheiten, 25,8 g eines α,ω-Dihydrogenpolydimethylsiloxans mit einer Viskosität von 67 mm²/s eingesetzt wird. Man erhält 26,1 g (92,7 % d. Th.) eines stark gelb gefärbten Siliconöles der Viskostät 1540 mm²/s.

5,82 g (2,64 mmol C=C-Doppelbindung) VS II werden mit 0,9 g (2,64 mmol C=C-Doppelbindung) eines kurzkettigen Polysiloxanes mit Trimethylsiloxy- und 11-Vinyloxy-3,6,9-trioxaundecenylmethylsiloxyeinheiten (OCH₃SiCH₂CH₂O(CH₂CH₂O)₂CH₂CH₂OCH=CH₂) der Viskosität 30 mm²/s gemischt. Die klare, gelbe Mischung wird dann nach der in Beispiel 1 beschriebenen Verfahrensweise auf eine Polypropylenfolie (käuflich erhältlich bei der Fa. UCB) aufgetragen unter den genannten Bedingungen vernetzen gelassen. Man erhält eine vollständig vernetzte Siliconbeschichtung.

### Beispiel 3

Die in Beispiel 1 beschriebene Verfahrensweise wird wiederholt mit der Abänderung, daß in die Formulierung zusätzlich 0,11 g (2 Gew.-% bezogen auf Reaktanteneinsatz) Hydroxyalkylphenon-Initiator (käuflich erhältlich unter der Marke Darocur® 1173 bei der Fa. Merck) zugemischt werden und die Strahlungshärtung unter Luftatmosphäre durchgeführt wird. Man erhält eine vollständig vernetzte Siliconbeschichtung.

### Beispiel 4

### IV) Synthese von N-Propargylmaleinimid:

38,3 g (0,7 mol) Propargylamin werden in 525 g Aceton unter Rühren vorgelegt. Dazu tropft man innerhalb von 30 Minuten eine Lösung von 69,0 g (0,7 mol) Maleinsäureanhydrid in 280 g Aceton und rührt anschließend weitere drei Stunden. Nach der Filtration erhält man 45,5 g (42,4 % d. Th.) eines orangenen Feststoffes, der nach der Trocknung in 91,8 g Paraffinöl dispergiert wird. Anschließend wird die Dispersion mit 29,4 g (0,3 mol) konzentrierter Schwefelsäure versetzt und zwei Stunden gerührt. Im Hochvakuum (0,1 mbar) wird dann über 2 Stunden langsam auf 140 °C temperiert, wobei das Produkt bei einer Siedetempeatur von 65 °C destilliert. Man erhält 28,7 g (26,7 % d. Th.) N-Propargylmaleinimid.

### V) Herstellung von Maleinimidsiloxan VS III:

2,35 g (17,4 mmol) N-Propargylmaleinimid, dessen Herstellung oben unter IV) beschrieben ist, 15 mg (460 ppm bezogen auf Reaktanteneinsatz) Hydrochinonmonomethylether, 12 g n-Butylacetat, 115 mg (20 ppm elementares Platin bezogen auf Reaktanteneinsatz) einer Lösung von Hexachloroplatinsäure im Ethylenglykol mit einem Platingehalt von 0,6 % und 30,7 g (17,4 mmol SiH) eines Polysiloxanes mit Trimethylsiloxy-, Dimethylsiloxy- und Hydrogenmethylsiloxyeinheiten der Viskosität 395 mm²/s werden bei 130°C 3 Stunden gerührt. Nach der Filtration wird das Reaktionsprodukt im Hochvakuum bei 110°C bis zur Gewichtskonstanz eingeengt. Man erhält 28,9 g (87,4 % d. Th.) eines gelben Siliconöles der Viskosität 2770 mm²/s (VS III).

### Beispiel 5

### VI) Herstellung von Maleinimidsiloxan VS IV:

Die in Beispiel 4 unter V) beschriebene Verfahrensweise wird wiederholt mit der Abänderung, daß anstelle von 30,7 g eines Polysiloxanes mit Trimethylsiloxy-, Dimethylsiloxy- und Hydrogenmethylsiloxyeinheiten, 35,7 g eines α,ω-Dihydrogenpolydimethylsiloxans mit einer Viskosität von 67 mm²/s eingesetzt wird. Man erhält 32,8 g (86,2 % d. Th.) eines gelben, klaren Siliconöles der Viskosität 1380 mm²/s.

### Beispiel 6

5,0 g (2,69 mmol C=C-Doppelbindung) VS III, dessen Herstellung in Beispiel 4 unter V) beschrieben ist, werden mit 0,55 g (2,69 mmol C=C-Doppelbindung) Dodecylvinylether gemischt. Mit der klaren, gelb gefärbten Formulierung wird dann wie in Beispiel 1 beschrieben verfahren. Man erhält eine vollständig vernetzte Siliconbeschichtung.

### Beispiel 7

Die in Beispiel 2 beschriebene Verfahrensweise wird wiederholt mit der Abänderung, daß anstelle von 5,82 g VS II 5,82 g (2,64 mmol C=C-Doppelbindung) VS IV eingesetzt wird. Man erhält eine vollständig vernetzte Siliconbeschichtung.

### Beispiel 8

5,19 g (17,4 mmol) Verbindung der Formel

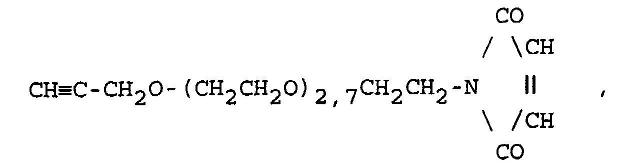

7,2 mg Hydrochinonmonomethylether, 20 g Ethylenglykoldiethylether, 120 mg (20 ppm elementares Platin, bezogen auf das Gesamtgewicht der Reaktanden) einer Lösung von Hexachloroplatinsäure in Ethylenglykol mit einem Platingehalt von 0,6 Gew.-% und 30,7 g (17,4 mmol SiH) eines Polysiloxanes mit Trimethylsiloxy-, Dimethylsiloxy- und Hydrogenmethylsiloxyeinheiten mit einer Viskosität von 395 mm²/s werden bei 110°C vier Stunden gerührt. Nach der Filtration wird das Reaktionsprodukt im Hochvakuum bei 100°C bis zur Gewichtskonstanz eingeengt. Man erhält 33,1 g eines gelben Siliconöles der Viskosität 3250 mm²/s

5,46 g des so erhaltenen Siliconöles werden mit 0,56 g (2,64 mmol C=C-Doppelbindung) Dodecylvinylether gemischt. Die klare, gelb gefärbte Formulierung wird dann mit einem Glasstab in einer Schichtstärke von ca. 2-3 um auf ein Polyethylen-beschichtetes Papier (käuflich erhältlich bei der Firma PWA Raubling) aufgetragen. Die Härtung erfolgt bei einer Bahngeschwindigkeit von 10 m/min unter einer Mitteldruckquecksilberlampe der Fa. Fusion (120 W/cm) bei einer Sauerstoffkonzentration von 45 ppm unter Stickstoffatmosphäre. Man erhält eine vollständig vernetzte Siliconbeschichtung.

## Patentansprüche

1. Vernetzbare Organosiloxanmassen enthaltend
A) Organosiliciumverbindungen mit mindestens einer Maleinimidgruppe der Formel 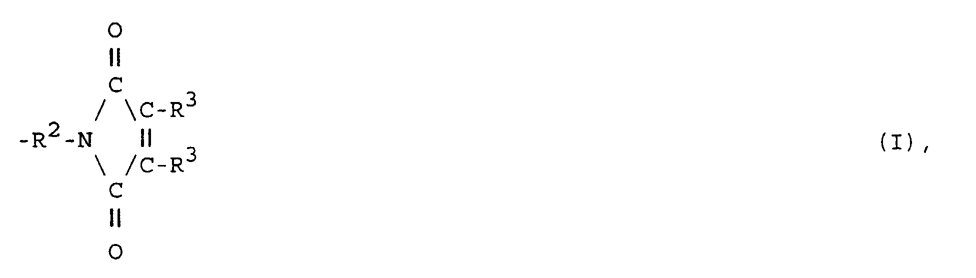 wobei
R² einen zweiwertigen, gegebenenfalls substituierten Kohlenwasserstoffrest darstellt, der ein oder mehrere Ethersauerstoffatome enthalten kann, und
R³ gleich oder verschieden ist und ein Wasserstoffatom oder einen gegebenenfalls substituierten Kohlenwasserstoffrest mit 1 bis 18 Kohlenstoffatomen bedeutet,
B) Alkenyloxyverbindung ausgewählt aus Alkenyloxyverbindungen der Formel
R⁴- CH = CH - OR⁵ (II),
Alkenyloxyverbindungen der Formel
R⁴- CH = CH - O - R⁶ - O - CH = CH - R⁴ (III),
oligomeren oder polymeren Organosiliciumverbindungen mit mindestens einer Alkenyloxygruppe der Formel
R⁴- CH = CH - O - (IV)
sowie deren Gemische,
wobei
R⁴ gleich oder verschieden sein kann und ein Wasserstoffatom oder einen Methylrest bedeutet, R⁵ einen gegebenenfalls substituierten Kohlenwasserstoffrest mit 1 bis 18 Kohlenstoffatomen, der durch ein oder mehrere Sauerstoffatome unterbrochen sein kann, bedeutet und R⁶ eine für R² angegebene Bedeutung hat,
C) gegebenenfalls Radikale bildende Initiatoren und
D) gegebenenfalls Inhibitoren.

2. Härtbare Organosiloxanmassen gemäß Anspruch 1, dadurch gekennzeichnet, daß es sich bei den Organosiliciumverbindungen (A) um solche aus Einheiten der Formel
AₐR_{b}SiX_{c}O_{(4-a-b-c)/2} (V)
handelt, wobei
R gleich oder verschieden ist, einen einwertigen, gegebenenfalls halogenierten Kohlenwasserstoffrest mit 1 bis 18 Kohlenstoffatomen bedeutet, X gleich oder verschieden ist und ein Halogenatom oder ein Rest -OR¹ ist, wobei R¹ einen Alkylrest mit 1 bis 18 Kohlenstoffatomen je Rest, der durch ein oder mehrere Ethersauerstoffatome substituiert sein kann, bedeutet,
A einen Rest der Formel (I) darstellt,
a 0 oder 1 ist,
b 0, 1, 2 oder 3 ist und
c 0, 1, 2 oder 3 ist,
mit der Maßgabe, daß die Summe a+b+c≤4 ist und mindestens ein Rest A je Molekül enthalten ist.

3. Härtbare Organosiloxanmassen gemäß Anspruch 1 oder 2, dadurch gekennzeichnet, daß es sich bei den Organosiliciumverbindungen (A) um solche aus Einheiten der Formel
A_{g}R_{3-g}SiO(SiR₂O)ₙ(SiRAO)ₘSiR_{3-g}A_{g} (VII)
handelt, wobei A und R die oben dafür angegebene Bedeutung haben,
g gleich oder verschieden sein kann und 0 oder 1 ist,
n 0 oder eine ganze Zahl von 1 bis 1500 ist und
m 0 oder eine ganze Zahl von 1 bis 200 ist, mit der Maßgabe,
daß mindestens ein Rest A je Molekül enthalten ist und n Einheiten (SiR₂O) und m Einheiten (SiRAO) beliebig im Molekül verteilt sein können.

4. Härtbare Organosiloxanmassen gemäß einem oder mehreren der Ansprüche 1 bis 3, dadurch gekennzeichnet, daß es sich bei Rest R² um zweiwertige gegebenenfalls mit Halogenatomen substituierte Kohlenwasserstoffreste mit 1 bis 35 Kohlenstoffatomen handelt, die durch ein oder mehrere Ethersauerstoffatome unterbrochen sein können incl. solche der Formeln
-(CH₂)₃O-(CH₂CH₂O)ₓCH₂CH₂- (VI),
-CH=CH-CH₂O(CH₂CH₂O)ₓCH₂CH₂- (VI'),
- (CH₂)₃O-(CH(CH₃)CH₂O)ₓCH₂CH₂- (VIʺ)
und
-CH=CH-CH₂O-(CH(CH₃)CH₂O)ₓCH₂CH₂-, (VI'''),
wobei x jeweils 0 oder eine ganze Zahl von 1 bis 15 ist.

5. Oligomere oder polymere Organosiliciumverbindungen mit mindestens einer Maleinimidgruppe der Formel 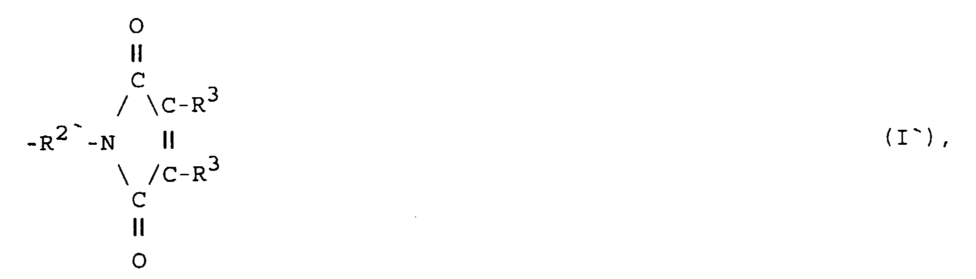 wobei
R^{2'} einen zweiwertigen, gegebenenfalls substituierten Alkenylenrest darstellt, der ein oder mehrere Ethersauerstoffatome enthalten kann, oder einen Rest der Formeln (VI) oder (VI") bedeutet und
R³ die oben angegebene Bedeutung hat.

6. Oligomere oder polymere Organosiliciumverbindungen gemäß Anspruch 5, dadurch gekennzeichnet, daß es sich um solche aus Einheiten der Formel (V) handelt mit A gleich einem Rest der Formel (I').

7. Härtbare Organosiloxanmassen gemäß einem oder mehreren der Ansprüche 1 bis 4, dadurch gekennzeichnet, daß es sich bei den Alkenyloxygruppen aufweisenden Verbindungen (B) um Organosiliciumverbindungen mit mindestens einer Alkenyloxygruppe der Formel (IV) handelt.

8. Verfahren zur Vernetzung der Organosiloxanmassen gemäß Anspruch 1 durch Bestrahlung mit energiereicher Strahlung.

9. Verfahren nach Anspruch 8, dadurch gekennzeichnet, daß es sich bei der energiereichen Strahlung um UV-Licht im Bereich von 200-400 nm, um monochromatisches Licht von Excimerlampen oder um Elektronenstrahlen handelt.

10. Formkörper hergestellt durch Vernetzung der Organosiloxanmassen gemäß Anspruch 1.

## Claims

1. Crosslinkable organosiloxane compositions comprising
A) organosilicon compounds having at least one maleimide group of the formula 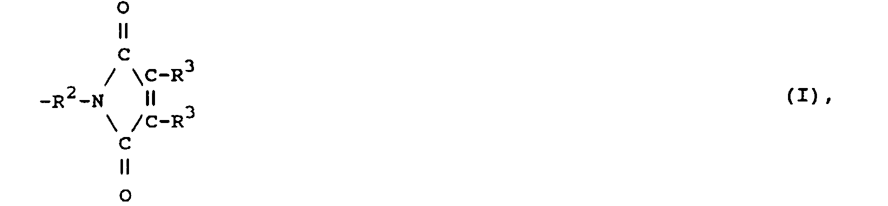 where
R² is a divalent, substituted or unsubstituted hydrocarbon radical which can contain one or more ether oxygen atoms, and
R³ is identical or different and is a hydrogen atom or a substituted or unsubstituted hydrocarbon radical having 1 to 18 carbon atoms,
B) an alkenyloxy compound selected from alkenyloxy compounds of the formula
R⁴- CH = CH - OR⁵ (II),
alkenyloxy compounds of the formula
R⁴- CH = CH - O - R⁶ - O - CH = CH - R⁴ (III),
oligomeric or polymeric organosilicon compounds having at least one alkenyloxy group of the formula
R⁴ - CH = CH - O - (IV)
and mixtures thereof,
where
R⁴ can be identical or different and is a hydrogen atom or a methyl radical, R⁵ is a substituted or unsubstituted hydrocarbon radical having 1 to 18 carbon atoms and can be interrupted by one or more oxygen atoms, and R⁶ is as defined for R²,
C) if desired, free-radical forming initiators, and
D) if desired, inhibitors.

2. Curable organosiloxane compositions according to Claim 1, characterized in that the organosilicon compounds (A) are those comprising units of the formula
AₐR_{b}SiX_{c}O_{(4-a-b-c)/2} (V),
where
R is identical or different and is a monovalent, optionally halogenated hydrocarbon radical having 1 to 18 carbon atoms, X is identical or different and is a halogen atom or a radical -OR¹ where R¹ is an alkyl radical having 1 to 18 carbon atoms per radical which can be substituted by one or more ether oxygen atoms,
A is a radical of the formula (I),
a is 0 or 1,
b is 0, 1, 2 or 3 and
c is 0, 1, 2 or 3,
with the proviso that the sum a+b+c≤4 and that at least one radical A is present per molecule.

3. Curable organosiloxane compositions according to Claim 1 or 2, characterized in that the organosilicon compounds (A) are those comprising units of the formula
A_{g}R_{3-g}SiO(SiR₂O)ₙ(SiRAO)ₘSiR_{3-g}A_{g} (VII),
where A and R are as defined above,
g can be identical or different and is 0 or 1,
n is 0 or an integer from 1 to 1500 and
m is 0 or an integer from 1 to 200, with the proviso that there is at least one radical A per molecule and that n units (SiR₂O) and m units (SiRAO) can be distributed in any arrangement in the molecule.

4. Curable organosiloxane compositions according to one or more of Claims 1 to 3, characterized in that radical R² comprises divalent hydrocarbon radicals which are unsubstituted or substituted by halogen atoms and have 1 to 35 carbon atoms, and can be interrupted by one or more ether oxygen atoms, including those radicals of the formulae
-(CH₂)₃O-(CH₂CH₂O)ₓCH₂CH₂- (VI),
-CH=CH-CH₂O(CH₂CH₂O)ₓCH₂CH₂- (VI'),
- (CH₂)₃O-(CH(CH₃)CH₂O)ₓCH₂CH₂- (VI'')
and
-CH=CH-CH₂O-(CH(CH₃)CH₂O)ₓCH₂CH₂-, (VI'''),
where x is in each case 0 or an integer from 1 to 15.

5. Oligomeric or polymeric organosilicon compounds having at least one maleimide group of the formula 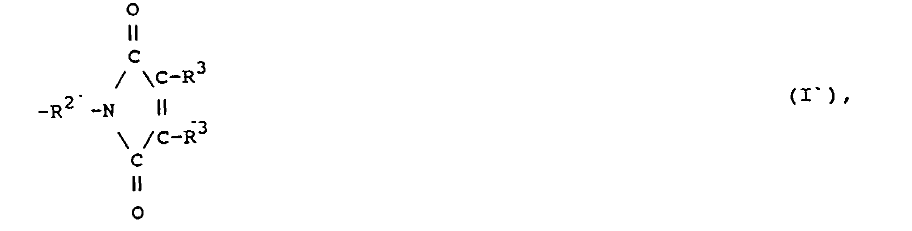 where
R^{2'} is a divalent, substituted or unsubstituted alkenylene radical which can contain one or more ether oxygen atoms, or is a radical of the formulae (VI) or (VI''), and
R³ is as defined above.

6. Oligomeric or polymeric organosiloxane compounds according to Claim 5, characterized in that they are those comprising units of the formula (V) where A is a radical of formula (I').

7. Curable organosiloxane compositions according to one or more of Claims 1 to 4, characterized in that the compounds (B) containing alkenyloxy groups are organosilicon compounds having at least one alkenyloxy group of the formula (IV).

8. Method of crosslinking the organosiloxane compositions according to Claim 1 by irradiation with high-energy radiation.

9. Method according to Claim 8, characterized in that the high-energy radiation is UV-light in the range of 200-400 nm, monochromatic light from excimer lamps, or electron beams.

10. Shaped articles produced by crosslinking the organosiloxane compositions according to Claim 1.

## Revendications

1. Compositions d'organosiloxanes réticulables comprenant
A) des composés organosiliciés ayant au moins un groupe maléinimide de formule 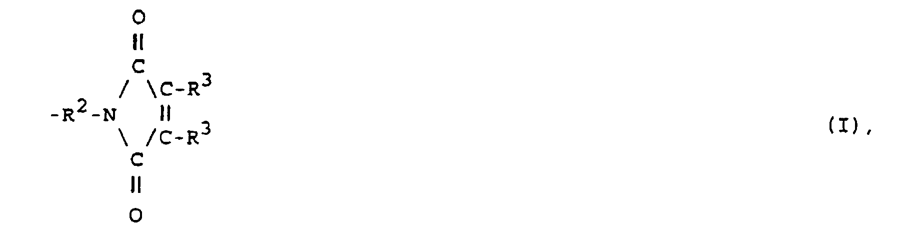 dans laquelle
R² représente un radical hydrocarboné bivalent éventuellement substitué, qui peut renfermer un ou plusieurs atomes d'oxygène d'éther, et
R³ est identique ou différent et représente un atome d'hydrogène ou un radical hydrocarboné éventuellement substitué ayant de 1 à 18 atomes de carbone,
B) un composé alcényloxy choisi parmi des composés alcényloxy de formule
R⁴- CH = CH - OR⁵ (II),
des composés alcényloxy de formule
R⁴- CH = CH - O - R⁶ - O - CH = CH - R⁴ (III),
des composés organosiliciés oligomères ou polymères ayant au moins un groupe alcényloxy de formule
R⁴- CH = CH - O - (IV),
ainsi que leurs mélanges
où
R⁴ peut être identique ou différent et représente un atome d'hydrogène ou un radical méthyle, R⁵ représente un radical hydrocarboné éventuellement substitué ayant de 1 à 18 atomes de carbone, qui peut être interrompu par un ou plusieurs atomes d'oxygène, et R⁶ a l'une des significations indiquées pour R²,
C) éventuellement des amorceurs générant des radicaux et
D) éventuellement des inhibiteurs.

2. Compositions d'organosiloxanes durcissables selon la revendication 1, caractérisées en ce que les composés organosiliciés (A) sont des composés à base de motifs de formule
AₐR_{b}SiX_{c}O_{(4-a-b-c)/2} (V)
dans laquelle
R est identique ou différent et représente un radical hydrocarboné monovalent éventuellement halogéné ayant de 1 à 18 atomes de carbone, X est identique ou différent et représente un atome d'halogène ou un radical -OR¹, dans lequel R¹ représente un radical alkyle ayant de 1 à 18 atomes de carbone par radical, qui peut être substitué par un ou plusieurs atomes d'oxygène d'éther,
A représente un radical de formule (I),
a vaut 0 ou 1,
b vaut 0, 1, 2 ou 3 et
c vaut 0, 1, 2 ou 3,
à condition que la somme a+b+c≤4 et qu'au moins un radical A soit présent par molécule.

3. Compositions d'organosiloxanes durcissables selon la revendication 1 ou 2, caractérisées en ce que les composés organosiliciés (A) sont des composés à base de motifs de formule
A_{g}R_{3-g}SiO(SiR₂O)ₙ(SiRAO)ₘSiR_{3-g}A_{g} (VII)
dans laquelle
A et R ont la signification indiquée ci-dessus à cet effet,
g peut être identique ou différent et vaut 0 ou 1,
n vaut 0 ou est un entier de 1 à 1500 et
m vaut 0 ou est un entier de 1 à 200, à condition qu'au moins un radical A soit présent par molécule et que n motifs (SiR₂O) et m motifs (SiRAO) puissent être répartis dans la molécule de manière quelconque.

4. Compositions d'organosiloxanes durcissables selon l'une ou plusieurs des revendications 1 à 3, caractérisées en ce que le radical R² comprend des radicaux hydrocarbonés bivalents éventuellement substitués par des atomes d'halogène, ayant de 1 à 35 atomes de carbone, qui peuvent être interrompus par un ou plusieurs atomes d'oxygène d'éther, y compris ceux de formules
- (CH₂)₃O-(CH₂CH₂O)ₓCH₂CH₂- (VI),
-CH=CH-CH₂O(CH₂CH₂O)ₓCH₂CH₂- (VI')
-(CH₂)₃O-(CH(CH₃)CH₂O)ₓCH₂CH₂- (VI'')
et
-CH=CH-CH₂O-(CH(CH₃)CH₂O)ₓCH₂CH₂- (VI''')
dans lesquelles chaque x vaut 0 ou est un entier de 1 à 15.

5. Composés organosiliciés oligomères ou polymères ayant au moins un groupe maléinimide de formule 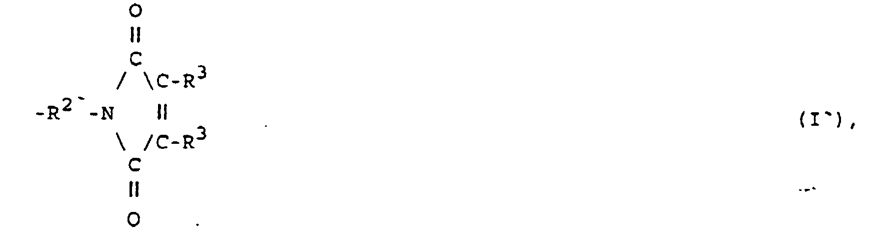 dans laquelle
R^{2'} représente un radical alcényle bivalent éventuellement substitué, qui peut renfermer un ou plusieurs atomes d'oxygène d'éther, ou représente un radical de formules (VI) ou (VI'') et
R³ a la signification indiquée ci-dessus.

6. Composés organosiliciés oligomères ou polymères selon la revendication 5, caractérisés en ce qu'ils sont des composés à base de motifs de formule (V) dans laquelle A est un radical de formule (I').

7. Compositions d'organosiloxanes durcissables selon l'une ou plusieurs des revendications 1 à 4, caractérisées en ce que les composés (B) renfermant des groupes alcényloxy sont des composés organosiliciés ayant au moins un groupe alcényloxy de formule (IV).

8. Procédé de réticulation des compositions d'organosiloxanes selon la revendication 1 par irradiation avec un rayonnement de haute énergie.

9. Procédé selon la revendication 8, caractérisé en ce que le rayonnement de haute énergie est de la lumière UV dans la gamme de 200 à 400 nm, de la lumière monochromatique provenant de lampes excimères ou des faisceaux d'électrons.

10. Articles mis en forme produits par réticulation des compositions d'organosiloxanes selon la revendication 1.
